# EUROPÄISCHE PATENTSCHRIFT

(11) **EP 4 511 556 B1**
(45) Veröffentlichungstag und Bekanntmachung des Hinweises auf die Patenterteilung: **15.10.2025**
(21) Anmeldenummer: 23750528.4
(22) Anmeldetag: 25.07.2023
(51) Int. Cl.: E05F 15/70, E05B 17/22, E05B 65/10, H01R 13/642, H01R 31/02, H02G 3/00

(54) **TÜRSYSTEM**
DOOR SYSTEM
SYSTÈME DE PORTE

(30) Priorität: 25.07.2022 AT 5012022 U
(43) Veröffentlichungstag der Anmeldung: 26.02.2025
(73) Patentinhaber: Peneder Bau-Elemente GmbH, 4904 Atzbach (AT)
(72) Erfinder: ZAUNER, Stefan, 4812 Pinsdorf (AT)
(74) Vertreter: SONN Patentanwälte GmbH & Co KG
(86) Internationale Anmeldenummer: PCT/AT2023/060246
(87) Internationale Veröffentlichungsnummer: WO 2024/020609

(56) Entgegenhaltungen:
- EP-A1- 1 437 468
- WO-A1-2010/139043
- WO-A1-2017/008876
- DE-A1- 19 625 237
- DE-A1- 4 344 729

## Beschreibung

Die Erfindung betrifft ein Türsystem, aufweisend eine Tür, insbesondere eine Schiebetür oder eine Drehflügeltür, elektrische Komponenten, die mit der Tür verbunden sind und welche zum Steuern und Überwachen zumindest einer Türfunktion vorgesehen sind, und einen Anschlusskasten, an welchen die elektrischen Komponenten über elektrische Leitungen angeschlossen sind.

Die Erfindung betrifft zudem ein Gebäudeteil, insbesondere eine Wand, mit einem solchen Türsystem.

Türsysteme mit einer Tür und damit verbundenen elektrischen Komponenten, bspw. zum Öffnen oder Schließen der Tür, sind bekannt. In modernen Gebäuden, insbesondere wenn diese ein elektrisches Gebäudemanagementsystem aufweisen, sind die Türen häufig mit zahlreichen elektrischen Komponenten verbunden, die entsprechende Anschlussleitungen aufweisen oder damit verbunden sind. Die Anschlussleitungen werden im Allgemeinen in einer Wand, in welcher die Tür vorgesehen ist, verlegt, und deren Enden aus der Wand herausgeführt. Ein Elektroinstallateur welcher zumindest einen Teil des von einem Monteur vormontierten Türsystems verkabeln soll, steht daher später vor dem Problem, die zahlreichen Anschlussleitungen korrekt miteinander zu verbinden. Zwar ist hierfür in manchen Fällen ein Anschlusskasten vorgesehen, an welchem die zu verbindenden Anschlussleitungen zusammengeführt werden; die korrekte Verbindung erfordert jedoch detaillierte Fachkenntnisse über die zu verbindenden Komponenten. Oftmals kann sogar ein spezialisierter Fachmann jene Anschlussleitungen, mit welchen eine Verbindung für die korrekte Funktion der Komponente herzustellen ist, aus der Vielzahl der Anschlussleitungen nicht eindeutig identifizieren. Dies birgt nicht nur die Gefahr einer fehlerhaften Verdrahtung des Türsystems, auch der Zeitaufwand und damit die Kosten für eine korrekte Türverdrahtung erhöhen sich hierdurch.

Die EP 1 065 577 B1 betrifft eine Sicherheitsvorrichtung für mindestens einen Flügel einer Tür in Flucht- und Rettungswegen. Die Tür weist u.a. eine Türverriegelung auf, die mit einer Türzentrale verbunden ist. Die Türzentrale ist vorzugsweise in einem Gehäuse neben der Tür angeordnet und enthält eine Steuerungseinheit mit Mikroprozessor, eine Spannungsversorgung, eine Anzeigeeinheit, einen Notauftaster und einen Schlüsselschalter. Die Türzentrale ist über eine serielle Schnittstelle an einen Klemmenkasten angeschlossen, an den zusätzlich weitere Peripheriegeräte, beispielsweise ein optischer und/oder akustischer Alarm sowie ein Brandmelder anschließbar sind. Zudem kann der Klemmenkasten mit einem Gebäudebus der Gebäudeleittechnik verbunden werden.

Die DE 43 44 729 A1 offenbart eine Steuerung und/oder Regelung für eine Tür. Die EP 1 437 468 A1 betrifft eine mobile Trennwand mit einer Steuerungseinheit. Die DE 196 25 237 A1 offenbart eine Sicherungs- und/oder Überwachungseinrichtung für eine Tür- oder Fensteranlage. Die Dokumente WO 2017/008876 A1 und WO 2010/139043 A1 zeigen Steckverbindungssysteme.

Die bekannten Türsysteme weisen den Nachteil auf, dass die Verdrahtung der mit einer Tür verbundenen elektrischen Komponenten spezifisches Fachwissen erfordert.

Es ist nun Aufgabe der Erfindung ein Türsystem wie eingangs angegeben zu schaffen, welches die Nachteile des Standes der Technik vermeidet oder zumindest verringert. Insbesondere soll das Türsystem den Anschluss der elektrischen Komponenten so weit vereinfachen, dass kein spezifisches Fachwissen hierfür erforderlich ist. Zudem soll das Türsystem ausgebildet sein, den für die Herstellung der elektrischen Verbindungen erforderlichen Zeitaufwand und damit auch die Installationskosten zu reduzieren.

Diese Aufgabe wird durch ein Türsystem gemäß Anspruch 1 und durch ein Gebäudeteil, insbesondere eine Wand, gemäß Anspruch 10 gelöst. Vorteilhafte Ausführungen und Weiterbildungen sind in den abhängigen Ansprüchen angegeben.

Das Türsystem ist dadurch gekennzeichnet, dass an dem Anschlusskasten zugewandten Enden zumindest zweier unterschiedlicher Teilmengen der elektrischen Leitungen jeweils ein erste elektrische Kontaktelemente aufweisendes Verbindungselement vorgesehen ist und der Anschlusskasten für jedes Verbindungselement jeweils ein zweite elektrische Kontaktelemente aufweisendes Anschlusselement aufweist, welches zum elektrischen Verbinden mit dem jeweiligen Verbindungselement ausgebildet ist, wobei jedes Anschlusselement und das damit zu verbindende Verbindungselement eine zur gegenseitigen Zuordnung ausgebildete Zuordnungseinrichtung aufweisen, die sich von den Zuordnungseinrichtungen der anderen Anschlusselemente und der damit zu verbindenden Verbindungselemente unterscheidet, und dass der Anschlusskasten eine Leiterplatte aufweist, mit welcher die Anschlusselemente verbunden sind, und Leiterbahnen der Leiterplatte jeweils zwei Enden aufweisen, wobei eines der Enden einer Leiterbahn mit einem zweiten elektrischen Kontaktelement eines der Anschlusselemente und das andere der Enden der Leiterbahn mit einem zweiten elektrischen Kontaktelement eines anderen der Anschlusselemente verbunden ist. Das Türsystem weist somit eine Tür auf, die eine Schiebetür oder eine Drehflügeltür, beispielsweise mit einem oder zwei Türflügeln, sein kann. Sofern nichts anderes angegeben ist, umfasst der Begriff "Tür" im Rahmen dieser Beschreibung allgemein verschließbare Öffnungen zum Durchtritt von Personen, Waren oder Fahrzeugen. Somit werden unter dem Begriff "Tür" im Rahmen dieser Beschreibung auch Tore verstanden, die bspw. als Rollentore ausgebildet sein können. Mit der Tür sind elektrische Komponenten des Türsystems verbunden, welche zum Steuern und Überwachen zumindest einer Türfunktion vorgesehen sind. Die elektrischen Komponenten können auch elektromechanische Komponenten sein. Die elektrischen Komponenten können in der Tür eingebaut oder an der Tür montiert oder in einem Abstand zur Tür angeordnet sein. Zudem weisen die elektrischen Komponenten elektrische Leitungen auf oder sind mit separaten elektrischen Leitungen verbindbar oder verbunden, um den elektrischen Komponenten elektrischen Strom oder elektrische Signale zuzuführen oder von diesen elektrischen Strom oder elektrische Signale zu erhalten. Das Türsystem weist zudem einen Anschlusskasten auf, an welchen die elektrischen Komponenten über die elektrischen Leitungen im Betriebszustand des Türsystems angeschlossen sind. Der Anschlusskasten ist vorzugsweise von der Tür beabstandet und bevorzugt an oder in einem Gebäudeteil oder einer anderen geeigneten Stützkonstruktion angeordnet. Der Anschlusskasten kann auf einer Gebäudewand oder mit Zugang für einen Monteur zumindest teilweise oder vollständig in einer Gebäudewand montiert sein. An dem Anschlusskasten zugewandten Enden zumindest zweier unterschiedlicher Teilmengen der elektrischen Leitungen ist jeweils ein Verbindungselement vorgesehen, welches erste elektrische Kontaktelemente aufweist. Somit sind zumindest zwei Verbindungselemente vorgesehen und jedes der Verbindungselemente ist an jenem Ende einer Teilmenge der elektrischen Leitungen angeordnet, welches im Betriebszustand des Türsystems dem Anschlusskasten zugewandt ist. Jede Teilmenge der elektrischen Leitungen kann eine oder mehrere elektrische Leitungen umfassen. Zumindest eines der ersten elektrischen Kontaktelemente ist mit einer elektrischen Leitung der Teilmenge verbunden. Der Anschlusskasten weist für jedes Verbindungselement jeweils ein zweite elektrische Kontaktelemente aufweisendes Anschlusselement auf, welches zum elektrischen Verbinden mit dem jeweiligen Verbindungselement ausgebildet ist. Beim elektrischen Verbinden des Verbindungselements mit dem Anschlusselement werden die ersten elektrischen Kontaktelemente mit den zweiten elektrischen Kontaktelementen elektrisch verbunden. Um die Verdrahtung des Türsystems zu vereinfachen, ist vorgesehen, dass jedes Anschlusselement und das damit zu verbindende Verbindungselement eine zur gegenseitigen Zuordnung ausgebildete Zuordnungseinrichtung aufweisen, die sich von den Zuordnungseinrichtungen der anderen Anschlusselemente und der damit zu verbindenden Verbindungselemente unterscheidet. Die Zuordnungseinrichtung kennzeichnet eindeutig die miteinander zu verbindenden Paare bestehend aus jeweils einem Anschlusselement und einem Verbindungselement. Für gewöhnlich verbindet ein Monteur des Türsystems den Anschlusskasten mit einem Teil der elektrischen Komponenten des Türsystems, während ein Elektroinstallateur unabhängig vom Monteur den Anschlusskasten mit einem anderen, gebäudeseitigen Teil der elektrischen Komponenten des Türsystems verbindet. Auf Grund der Zuordnungseinrichtung benötigt der Elektroinstallateur, der das Türsystem teilweise verdrahten soll, keine detaillierten Fachkenntnisse über die anderen elektrischen Komponenten und muss auch nicht ermitteln welche aus einer Gebäudewand herausragenden Drahtenden miteinander bzw. mit welcher elektrischen Komponente zu verbinden sind. Stattdessen kann der Elektroinstallateur jenes Anschlusselement mit jenem Verbindungselement verbinden, welche durch die Zuordnungseinrichtung eindeutig einander zugeordnet sind. Die Zuordnungseinrichtung ist einfach für den Elektroinstallateur erkennbar. Somit steht der Elektroinstallateur nicht mehr vor dem Problem aus einer Vielzahl von Leitungsenden die aus einer Gebäudewand herausragen, jene Enden ermitteln zu müssen, die miteinander verbunden werden müssen. Der Anschlusskasten kann eine Länge zwischen 150 mm und 300 mm, eine Breite zwischen 100 mm und 200 mm sowie eine Höhe zwischen 40 mm und 70 mm besitzen.

Sofern im Rahmen dieser Beschreibung auf Orts- oder Richtungsangaben Bezug genommen wird, sind diese Angaben in Bezug auf eine Betriebsposition bzw. einen Betriebszustand des Türsystems zu verstehen.

Gemäß einer bevorzugten Ausführungsform der Erfindung ist als Zuordnungseinrichtung ein im verbundenen Zustand vorliegender Formschluss zwischen den Anschlusselementen und den damit zu verbindenden Verbindungselementen, insbesondere ein Formschluss zwischen Gehäusen und/oder Kontaktelementanordnungen der Anschlusselemente und der Verbindungselemente, oder eine jeweils den Anschlusselementen und den damit zu verbindenden Verbindungselementen zugeordnete Farbgebung oder Beschriftung vorgesehen. Auf diese Weise ist das Anschlusselement dem damit zu verbindenden Verbindungselement eindeutig und rasch erkennbar zuordenbar. Wenn als Zuordnungseinrichtung ein Formschluss zwischen den Anschlusselementen und den damit verbundenen Verbindungselementen vorgesehen ist, weist jedes Paar von einem Anschlusselement und einem damit verbundenen Verbindungselement im Vergleich zu einem anderen Paar von einem Anschlusselement und einem damit verbundenen Verbindungselement einen anderen Formschluss auf, sodass eine Verwechslung beim Verbinden eines Anschlusselements mit dem damit zu verbindenden Verbindungselement ausgeschlossen wird. Hierbei ist es günstig, wenn der Formschluss zwischen einem Gehäuse des Anschlusselements und einem Gehäuse des Verbindungselements und/oder zwischen einer Kontaktelementanordnung des Anschlusselements und einer Kontaktelementanordnung des Verbindungselements ausgebildet ist. Ein Formschluss zwischen den Kontaktelementanordnungen kann insbesondere durch eine gleiche Anzahl von ersten elektrischen Kontaktelementen und damit verbindbaren zweiten elektrischen Kontaktelementen hergestellt werden. Ebenso kann eine jeweils den Anschlusselementen und den damit zu verbindenden Verbindungselementen zugeordnete Farbgebung oder Beschriftung als Zuordnungseinrichtung vorgesehen sein. Dabei wird jede Farbgebung oder Beschriftung nur einmal für ein Paar der Paare aus Anschlusselementen und Verbindungselementen verwendet. Somit kann ein Gehäuse eines Anschlusselements eine gleiche Farbgebung und/oder Beschriftung aufweisen wie ein Gehäuse des damit zu verbindenden Verbindungselements.

Die Verbindung zwischen den Anschlusselementen und den damit zu verbindenden Verbindungselementen kann besonders vorteilhaft ausgeführt werden, wenn die ersten und zweiten elektrischen Kontaktelemente Steck-Kontaktelemente sind und insbesondere das Verbindungselement ein Stecker oder eine Buchse ist und das Anschlusselement das andere von einem Stecker und einer Buchse ist. Somit kann die elektrische Verbindung zwischen den ersten und zweiten elektrischen Kontaktelementen durch Zusammenstecken erfolgen. Besonders bevorzugt ist diese Steckverbindung auch wieder lösbar, insbesondere werkzeuglos lösbar, ausgebildet. Eine einfache Konstruktion kann vorsehen, dass als Verbindungselement ein Stecker vorgesehen ist, der in eine als Anschlusselement ausgebildete Buchse eingesteckt wird oder umgekehrt als Verbindungselement eine Buchse vorgesehen ist, welche auf einen als Anschlusselement vorgesehenen Stecker aufgeschoben wird.

Die Anschlusselemente können in einer Gehäusewand des Anschlusskastens oder im Inneren des Anschlusskastens vorgesehen sein, wobei in letzterem Fall der Anschlusskasten ein öffenbares Gehäuse zum Zugriff auf die Anschlusselemente und Durchgangsöffnungen für die mit den Verbindungselementen verbundenen elektrischen Leitungen aufweist.

Für eine effiziente und einfache Verdrahtung des Türsystems ist es günstig, wenn jedes Verbindungselement über eine der Teilmengen der elektrischen Leitungen mit einer der elektrischen Komponenten verbunden ist und insbesondere jede elektrische Komponente über eine der Teilmengen der elektrischen Leitungen mit einem der Verbindungselemente verbunden ist. Somit kann der Monteur oder der Elektroinstallateur davon ausgehen, dass tatsächlich jedes Verbindungselement mit einer der elektrischen Komponenten verbunden ist und wird nicht durch zusätzliche Verbindungselemente irritiert. Wenn jede elektrische Komponente über eine der Teilmengen der elektrischen Leitungen mit einem der Verbindungselemente verbunden ist, ist das Türsystem nach Verbinden aller Verbindungselemente mit dem Anschlusskasten vollständig verdrahtet.

Für eine sorgfältige und kostengünstige Verlegung der elektrischen Leitungen können die elektrischen Leitungen zwischen den elektrischen Komponenten und den Verbindungselementen als zumindest ein Kabelbaum ausgebildet sein. Der zumindest eine Kabelbaum kann vorgefertigt in die Tür und/oder in die Stützkonstruktion der Tür, insbesondere eine Gebäudewand, eingebracht werden. Es können auch mehrere voneinander unabhängige Kabelbäume vorgesehen sein. Bevorzugt ist der Kabelbaum vorgefertigt mit den Verbindungselementen ausgebildet, sodass sich der Monteur oder der Elektroinstallateur um die Leitungsführung zwischen den elektrischen Komponenten und den Verbindungselementen nicht kümmern muss. Beispielsweise kann jede elektrische Komponente über einen eigenen Kabelbaum mit einem Verbindungselement verbunden sein oder es können mehrere elektrische Komponenten über einen gemeinsamen Kabelbaum mit mehreren Verbindungselementen verbunden sein.

Günstigerweise können die elektrischen Komponenten eines oder mehrere von
- einem elektrisch betriebenen Motorschloss,
- einem elektrisch kuppelbaren Schloss,
- einem mechanischen Schloss mit Rückmeldungen,
- einem elektrischen Türöffner,
- einem elektrischen Türkontaktsensor,
- einem Riegelschaltkontakt,
- einem elektrisch angetriebenen Türantrieb,
- einem elektrischen Bedienelement, insbesondere einem Näherungssensor, einem Taster oder einem Schlüsselschalter sein, welche der Tür zugeordnete Türkomponenten sind,
   und/oder eines oder mehrere von
- einem Steuerungsmodul für ein Gebäude oder
- einer Brandmeldeanlage sein,
welche dem Gebäude zugeordnete Gebäudekomponenten sind. Diese Komponenten dienen dem Steuern und Überwachen zumindest einer Türfunktion und können mittels des Anschlusskastens und der Verbindungselemente, wie durch die Zuordnungseinrichtungen vorgegeben ist, miteinander verbunden werden. Selbstverständlich kann das Türsystem weitere elektrische Komponenten aufweisen. Das Steuerungsmodul für ein Gebäude kann ein Gebäudeleitsystem sein.

Erfindungsgemäß weist der Anschlusskasten eine Leiterplatte auf, mit welcher die Anschlusselemente verbunden sind. Die Anschlusselemente sind vorzugsweise auf der Leiterplatte montiert. Günstig ist, wenn die zweiten elektrischen Kontaktelemente eines einer Türkomponente zugeordneten Anschlusselements über die Leiterbahnen der Leiterplatte mit den zweiten elektrischen Kontaktelementen eines einer Gebäudekomponente zugeordneten Anschlusselements verbunden sind. Auf diese Weise enthält der Anschlusskasten alle elektrischen Verbindungen, welche erforderlich sind, um das Türsystem auf einfache Weise dadurch zu verdrahten, dass die Verbindungselemente mit den entsprechenden Anschlusselementen verbunden werden. Über die Leiterbahnen der Leiterplatte können daher die Anschlusselemente den Anforderungen an das Türsystem entsprechend miteinander verbunden sein. Insbesondere kann zumindest ein einer Türkomponente zugeordnetes Anschlusselement mit zumindest einem einer Gebäudekomponente zugeordneten Anschlusselement elektrisch verbunden sein. Die Leiterplatte ist bevorzugt vorgefertigt im Anschlusskasten aufgenommen und mit den Anschlusselementen verbunden.

Besonders günstig ist es, wenn der Anschlusskasten zudem zumindest eine elektrische Sicherung und/oder einen Gleichrichter und/oder einen Transformator aufweist. Somit entfällt die Notwendigkeit die Sicherung, den Gleichrichter und/oder den elektrischen Transformator gesondert montieren und anschließen zu müssen. Während die zumindest eine Sicherung bekannter Weise Schäden an den elektrischen Komponenten durch übermäßig hohe Ströme verhindern kann, dient der Gleichrichter der Umwandlung einer Wechselspannung in eine Gleichspannung für die elektrischen Komponenten. Der Transformator reduziert eine Eingangsspannung, beispielsweise Netzspannung, auf ein für die elektrischen Komponenten erforderliches Maß, insbesondere Kleinspannung. Der Transformator reduziert beispielsweise eine Netzspannung von 230V auf 24V oder 12V.

Die Installation des Türsystems kann weiters dadurch vereinfacht werden, dass der Anschlusskasten zur Montage an einer Gebäudewand ausgebildet ist. Ein derart ausgebildeter Anschlusskasten kann daher an jener Gebäudewand montiert werden, in welcher die Tür vorgesehen ist. Vorzugsweise wird der Anschlusskasten oberhalb oder neben der Tür montiert. Für die Montage an einer Gebäudewand weist der Anschlusskasten zum Beispiel eine Bodenplatte mit Durchgangsöffnungen oder abstehende Stege oder Laschen mit Durchgangsöffnungen auf. In die Durchgangsöffnungen können somit in der Gebäudewand verankerbare Befestigungsschrauben eingesetzt werden.

Das erfindungsgemäße Gebäudeteil, insbesondere eine Wand, ist mit einem Türsystem gemäß der vorhergehenden Beschreibung ausgebildet. Hinsichtlich der Merkmale des Gebäudeteils wird auf die vorangehende Beschreibung des Türsystems verwiesen, soweit diese Beschreibung auf das Gebäudeteil anwendbar ist.

Die Erfindung wird im Folgenden anhand von bevorzugten, nicht einschränkenden Ausführungsbeispielen unter Bezugnahme auf die Zeichnungen noch weiter erläutert. Es zeigen:
Fig. 1 symbolisch ein Türsystem gemäß der Erfindung, mit einer Tür, elektrischen Komponenten und einem Anschlusskasten;
Fig. 2 einen Anschlusskasten in einer perspektivischen Ansicht;
Fig. 3 den Anschlusskasten aus Fig. 2 in einer anderen perspektivischen Ansicht;
Fig. 4 symbolisch ein Türsystem gemäß der Erfindung, mit einer Tür, anderen elektrischen Komponenten und einem Anschlusskasten;
Fig. 5 symbolisch ein Türsystem gemäß der Erfindung, mit einer Tür, noch anderen elektrischen Komponenten und einem Anschlusskasten;
Fig. 6 symbolisch ein Türsystem gemäß der Erfindung, mit einer anderen Tür, anderen elektrischen Komponenten und einem Anschlusskasten;
Fig. 7 ein Beispiel eines Verbindungselements mit einer elektrischen Leitung;
Fig. 8 symbolisch ein Türsystem gemäß der Erfindung mit einem mit den elektrischen Komponenten verbundenen Kabelbaum;
Fig. 9 symbolisch einen Anschlusskasten mit einer Anschlussbelegung;
Fig. 10 eine Leiterplatte eines Anschlusskastens;
Fig. 11 eine Unterseite eines Anschlusskastens in einer perspektivischen Ansicht; und
Fig. 12 einen beispielhaften Schaltplan eines Anschlusskastens.

Es sei darauf hingewiesen, dass alle Figuren lediglich Beispiele, fallweise in vereinfachter Form, darstellen und unterschiedliche Figuren unterschiedliche Beispiele zeigen können, sofern nichts Gegenteiliges angegeben wird.

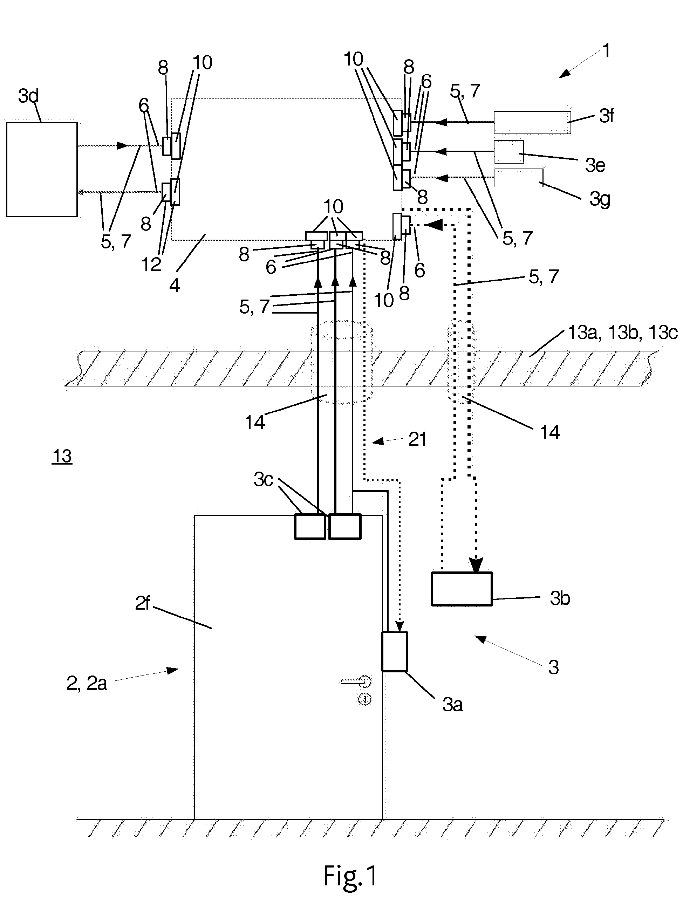

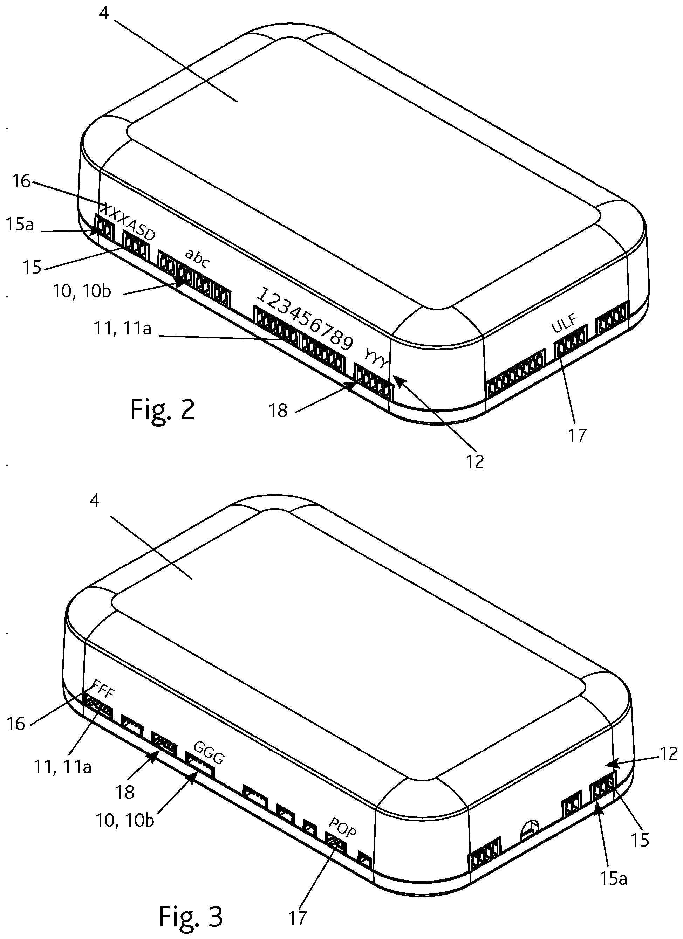

Fig. 1 zeigt symbolisch ein Türsystem 1 gemäß der Erfindung mit einer Tür 2, elektrischen Komponenten 3 und einem Anschlusskasten 4. Die Tür 2 ist im dargestellten Beispiel eine einflügelige Drehflügeltür 2a. Selbstverständlich kann die Drehflügeltür 2a auch mehrflügelig sein. In nicht dargestellten Ausführungsformen kann die Tür 2 auch eine Schiebetür oder ein beliebiges Tor sein. Mit der Tür 2 sind elektrische Komponenten 3 verbunden, welche zum Steuern und Überwachen zumindest einer Türfunktion vorgesehen sind. Im Beispiel gemäß Fig. 1 sind die elektrischen Komponenten 3 ein elektrischer Türöffner 3a, ein elektrisches Bedienelement 3b und elektrische Türkontaktsensoren 3c, welche der Tür 2 zugeordnete Türkomponenten sind, sowie ein Steuerungsmodul bzw. ein Gebäudeleittechnikanschluss 3d für ein nicht dargestelltes Gebäude, eine Brandmeldeanlage 3e, eine Stromversorgung 3f, und eine Fluchtwegkennzeichnung 3g, welche dem Gebäude zugeordnete Gebäudekomponenten sind. Die elektrischen Komponenten 3 sind über elektrische Leitungen 5 an den Anschlusskasten 4 angeschlossen. An den Enden 6 von zumindest zwei unterschiedlichen Teilmengen 7 der elektrischen Leitungen 5, welche Enden 6 im mit dem Anschlusskasten 4 verbundenen Zustand dem Anschlusskasten 4 zugewandt sind, ist jeweils ein Verbindungselement 8 vorgesehen, welches erste elektrische Kontaktelemente 9 aufweist, vgl. z.B. Fig. 2. Eine Teilmenge 7 bezeichnet eine oder mehrere der elektrischen Leitungen 5. Der Anschlusskasten 4 weist für jedes Verbindungselement 8 jeweils ein Anschlusselement 10 auf, welches zweite elektrische Kontaktelemente 11 aufweist, vgl. z.B. Fig. 2, und zum elektrischen Verbinden mit dem jeweiligen Verbindungselement 8 ausgebildet ist. Um die elektrischen Komponenten 3 korrekt an den Anschlusskasten 4 anschließen zu können, d.h. um die Verbindungselemente 8 mit dem jeweils korrekten Anschlusselement 10 verbinden zu können, weisen jedes Anschlusselement 10 und das damit zu verbindende Verbindungselement 8 eine zur gegenseitigen Zuordnung ausgebildete Zuordnungseinrichtung 12 auf, wobei sich jede Zuordnungseinrichtung 12 von jeder anderen Zuordnungseinrichtung 12 des Türsystems 1 unterscheidet. Der Übersichtlichkeit wegen ist in Fig. 1 nur eine Zuordnungseinrichtung 12 dargestellt.

In Fig. 1 ist zudem symbolisch ein Abschnitt 13a eines Gebäudeteils 13 dargestellt. Der Abschnitt 13a kann eine Wand 13b oder eine Geschoßdecke 13c darstellen. Das Gebäudeteil 13, insbesondere die Wand 13b, weist das Türsystem 1 auf. Beispielsweise ist die Tür 2 in der Wand 13b eingebaut und der Anschlusskasten 4 ist in oder auf der Wand 13b montiert. Alternativ kann der Anschlusskasten 4 auf einer anderen Wand 13b oder in einem anderen Stockwerk montiert sein. In letzterem Fall symbolisiert der Abschnitt 13a eine Geschoßdecke 13c, wofür Leitungsdurchführungen 14 vorgesehen sind.

Fig. 2 zeigt einen beispielhaften Anschlusskasten 4 und Fig. 3 zeigt denselben Anschlusskasten 4 aus einer im Vergleich zu Fig. 2 entgegengesetzten Blickrichtung. Deutlich erkennbar sind die Anschlusselemente 10, welche im Betriebszustand des Türsystems 1 mit den Verbindungselementen 8 verbunden sind, und mehrere Zuordnungseinrichtungen 12, wobei jede Zuordnungseinrichtung 12 einem Anschlusselement 10 zugeordnet ist. Als Zuordnungseinrichtung 12 kann ein im verbundenen Zustand vorliegender Formschluss zwischen den Anschlusselementen 10 und den damit zu verbindenden Verbindungselementen 8 oder eine jeweils den Anschlusselementen 10 und den damit zu verbindenden Verbindungselementen 8 zugeordnete Farbgebung 15 oder Beschriftung 16 vorgesehen sein. In den Beispielen gemäß den Fig. 2 und 3 sind als Zuordnungseinrichtungen 12 Flächenbereiche 15a um die Anschlusselemente 10 herum farbig gestaltet und mit einer Beschriftung 16 versehen. Die in Fig. 2 und 3 nicht dargestellten Verbindungselemente 8 weisen ebenso eine Farbmarkierung 15, vorzugsweise mit der gleichen Farbe, und/oder eine Beschriftung 16, vorzugsweise eine zumindest teilweise gleichlautende Beschriftung, als Zuordnungseinrichtungen 12 auf. Da einige Anschlusselemente 10 unterschiedliche Formen, insbesondere eine unterschiedliche Anzahl zweiter elektrischer Kontaktelemente 11, aufweisen, kann die korrekte Zuordnung der Verbindungselemente 8 zu den Anschlusselementen 10 zumindest für einige Verbindungselemente 8 auch durch den Formschluss mit den Anschlusselementen 10 erfolgen. Allgemein kann der Formschluss zwischen Gehäusen 17 und/oder Kontaktelementanordnungen 18 der Anschlusselemente 10 und der Verbindungselemente 8 gebildet sein.

Die Fig. 2, 3 und 7 zeigen zudem, dass die ersten elektrischen Kontaktelemente 9 und die zweiten elektrischen Kontaktelemente 11 Steck-Kontaktelemente 9a, 11a sind. Weiters ist gezeigt, dass insbesondere das Verbindungselement 8 ein Stecker 8a oder eine Buchse 8b ist und das Anschlusselement 10 das andere von einem Stecker 10a und einer Buchse 10b ist.

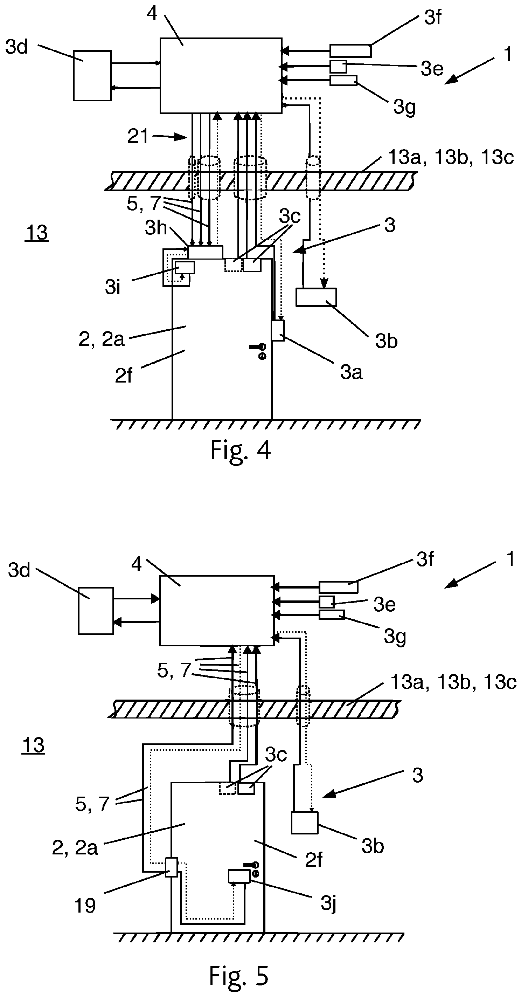

In den Fig. 4, 5 und 6, auf welche im folgenden Bezug genommen wird, sind der Übersichtlichkeit wegen die Verbindungselemente 8 und die Anschlusselemente 10 nicht dargestellt.

Fig. 4 zeigt ein Türsystem 1, welches im Vergleich zum Türsystem gemäß Fig. 1 als zusätzliche elektrische Komponente 3 einen elektrisch angetriebenen Türantrieb 3h zum Antrieb des Türflügels 2f aufweist. Der Türantrieb 3h ist eine der Tür 2 zugeordnete Türkomponente. Als weitere, der Tür 2 zugeordnete elektrische Komponente 3 ist ein Lasersensorset 3i zur Überwachung einer Türflügelbewegung vorgesehen.

Fig. 5 zeigt ein Türsystem 1, welches im Vergleich zum Türsystem gemäß Fig. 1 an Stelle eines elektrischen Türöffners 3a ein elektrisch betriebenes Motorschloss 3j als elektrische Komponente 3, insbesondere als der Tür 2 zugeordnete Türkomponente aufweist. Das Motorschloss 3j ist über einen Kabelübergang 19, welcher einen Spalt zwischen dem Türflügel 2f und einer Türzarge 2z überbrückt, mit dem Anschlusskasten 4 verbunden.

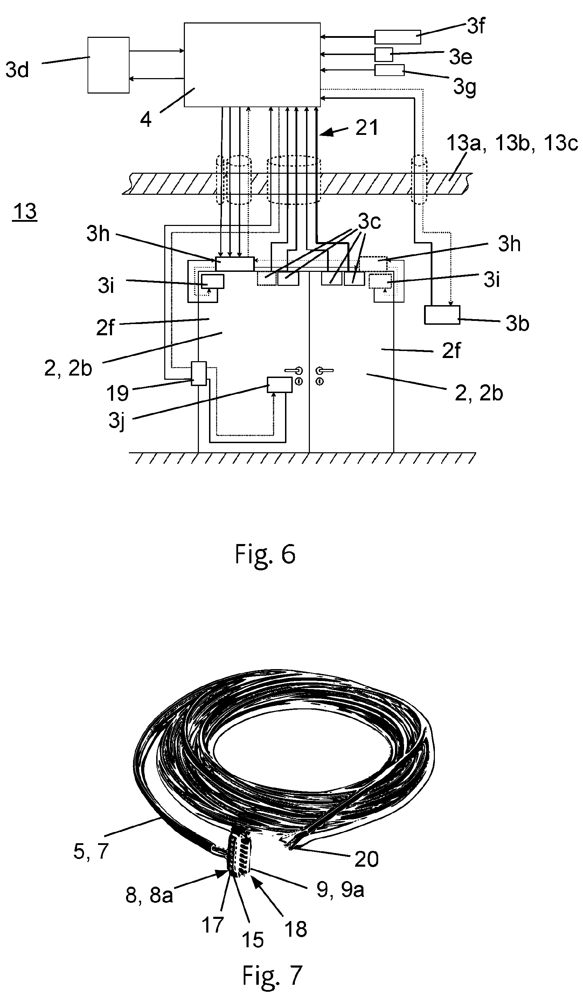

Fig. 6 zeigt ein Türsystem 1, welches im Unterschied zum Türsystem gemäß Fig. 1 eine Doppelflügeltür 2b, d.h eine Tür 2 mit zwei Türflügeln 2f, aufweist. Jene elektrische Komponenten 3 die der Tür 2 zugeordnete Türkomponenten sind, sind ein elektrisches Bedienelement 3b, zwei elektrische Türkontaktsensoren 3c, zwei elektrisch angetriebene Türantriebe 3h, zwei Lasersensorsets 3i zur Überwachung der Türflügelbewegung und ein elektrisch betriebenes Motorschloss 3j.

Die Fig. 1, 4, 5, und 6 zeigen zudem, dass jedes Verbindungselement 8 über die Teilmenge 7 der elektrischen Leitungen 5 mit einer der elektrischen Komponenten 3 verbunden ist und insbesondere jede elektrische Komponente 3 über eine Teilmenge 7 der elektrischen Leitungen 5 mit einem der Verbindungselemente 8 verbunden ist.

Fig. 7 zeigt ein Verbindungselement 8, welches mit einer Teilmenge 7 der elektrischen Leitungen 5 verbunden ist. Die Teilmenge 7 der elektrischen Leitungen 5 kann mehrere einzelne Drähte 20 aufweisen, welche mit einer elektrischen Komponente 3 verbunden sind (in Fig. 7 nicht dargestellt).

Die Fig. 1, 4, 5, und 6 zeigen weiters, dass die elektrischen Leitungen 5 zwischen den elektrischen Komponenten 3 und den Verbindungselementen 8 als zumindest ein Kabelbaum 21 ausgebildet sind.

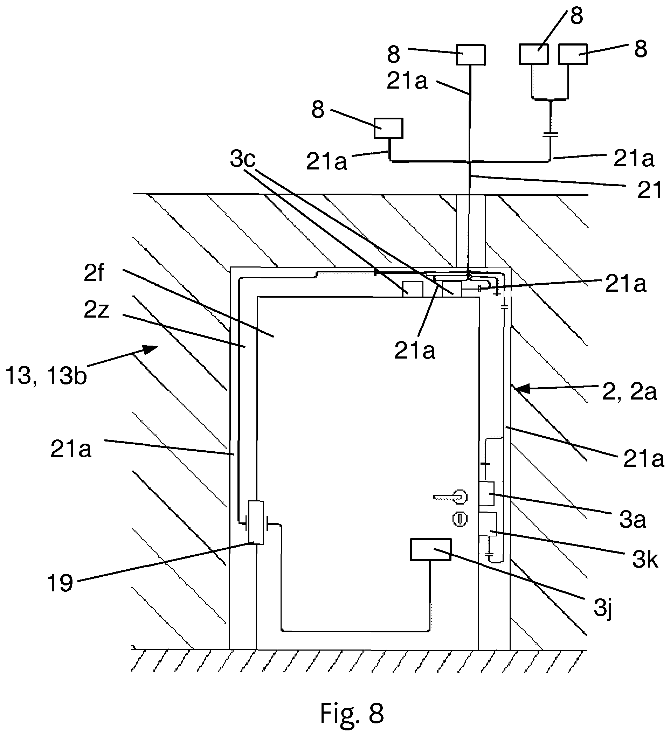

Fig. 8 zeigt symbolisch eine detailliertere Darstellung eines aus mehreren einzelnen Kabelbäumen 21a zusammengesetzten Kabelbaums 21, welcher zum Teil in der Türzarge 2z, zum Teil im Türflügel 2f und zum Teil in der Wand 13b verläuft. Allfällige Steckverbindungen, mit welchen die einzelnen Kabelbäume 21a miteinander verbunden werden, können eine gegenseitige Verriegelung aufweisen, um ein Lösen der Verbindung im nach der Montage unzugänglichen Bereich (z.B. in der Türzarge 2z) zu verhindern. Eine der elektrischen Komponenten 3, welche eine der Tür zugeordnete Türkomponente ist, ist ein Riegelschaltkontakt 3k.

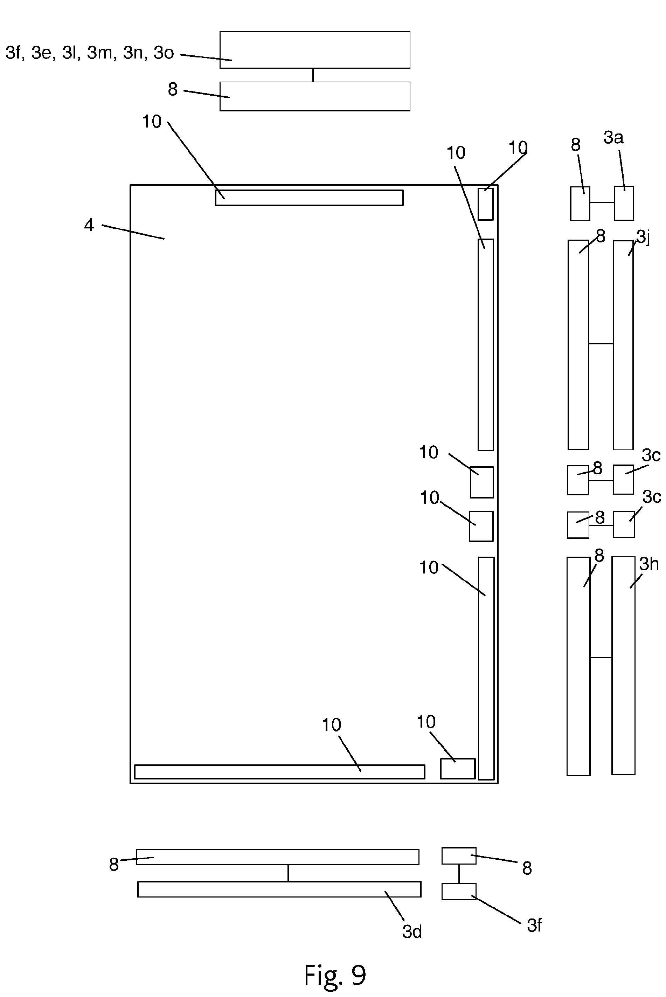

Fig. 9 zeigt symbolisch einen Anschlusskasten 4 mit seinen Anschlusselementen 10 und Signalen, welche zu den Anschlusselementen 10, insbesondere den zweiten elektrischen Kontaktelementen 11, und davon wegführen. Der Anschlusskasten 4 kann mit einem elektrischen Türöffner 3a, elektrischen Türkontaktsensoren 3c, einem Steuerungsmodul 3d, elektrisch angetriebenen Türantrieben 3h, einem Motorschloss 3j, einer Stromversorgung 3f, bspw. mit 230V, einer Brandmeldeanlage 3e, einem Näherungssensor 3l, zum Öffnen der Tür 2 bei Annäherung einer Person oder eines Fahrzeugs, einem Taster 3m, zum manuellen Öffnen der Tür 2, einem Schlüsselschalter 3n, zum Öffnen der Tür 2 mit einem Schlüssel, und einem Programmschalter 3o, zum Einstellen einer Türfunktion, verbunden werden. Der elektrischen Türöffner 3a, die elektrischen Türkontaktsensoren 3c, die elektrisch angetriebenen Türantriebe 3h, das Motorschloss 3j, der Näherungssensor 3l, der Taster 3m, der Schlüsselschalter 3n und der Programmschalter 3o sind elektrische Komponenten 3, welche der Tür 2 zugeordnete Türkomponenten sind.

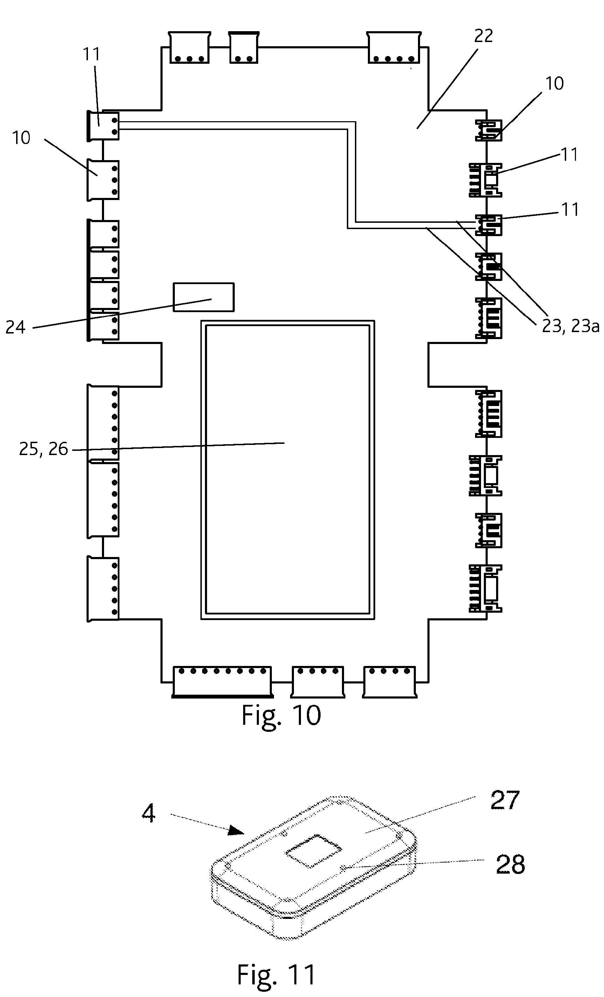

Fig. 10 zeigt symbolisch eine Leiterplatte 22 des Anschlusskastens 4, mit welcher die Anschlusselemente 10 verbunden sind, insbesondere auf welcher die Anschlusselemente 10 montiert sind. Mittels der Leiterplatte 22 sind die zweiten elektrischen Kontaktelemente 11 eines der Anschlusselemente 10, insbesondere eines einer Türkomponente zugeordneten Anschlusselements 10, über Leiterbahnen 23a der Leiterplatte 22 mit den zweiten elektrischen Kontaktelementen 11 eines anderen der Anschlusselemente 10, insbesondere eines einer Gebäudekomponente zugeordneten Anschlusselements 10, verbunden.

In Fig. 10 sind der Übersichtlichkeit wegen nur zwei Leiterbahnen 23a der Leiterplatte 22 dargestellt.

In Fig. 10 ist weiters beispielhaft erkennbar, dass der Anschlusskasten 4 zudem zumindest eine elektrische Sicherung 24 und/oder einen Gleichrichter 25 und/oder einen Transformator 26 aufweisen kann.

Fig. 11 zeigt eine Unterseite 27 eines Anschlusskastens 4 in einer perspektivischen Ansicht. Die Unterseite 27, welche als Bodenplatte ausgebildet ist und im montierten Zustand des Anschlusskastens 4 einer Gebäudewand 13b zugewandt ist, weist Durchgangsöffnungen 28, im dargestellten Beispiel sechs Durchgangsöffnungen 28 auf, um den Anschlusskasten 4 an eine Gebäudewand 13b schrauben zu können. Der Anschlusskasten 4 ist daher bevorzugt zur Montage an einer Gebäudewand 13b ausgebildet.

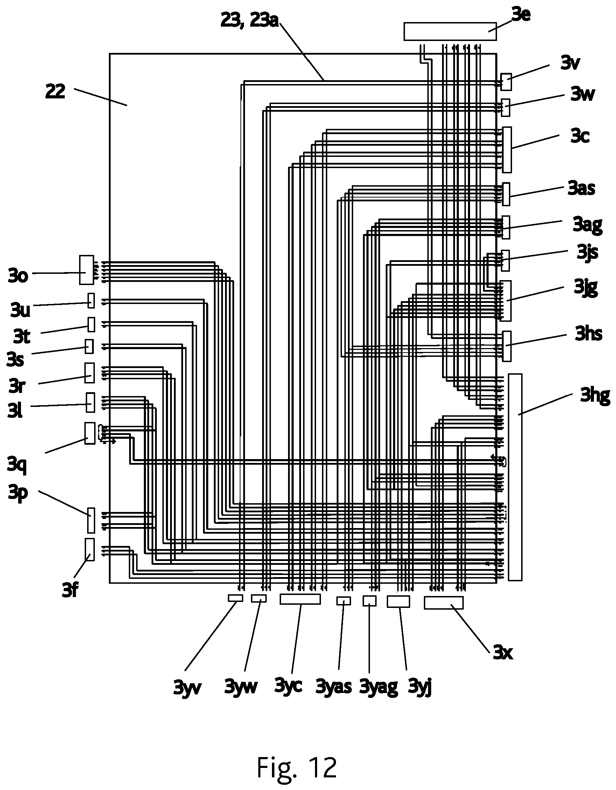

Fig. 12 zeigt einen beispielhaften Schaltplan eines Anschlusskastens 4. Beispielsweise sind die Leiterbahnen 23a zur

### Verbindung mit folgendem vorgesehen:

230 V Wechselspannungsversorgung 3f, 2 mal 24 V Gleichspannungsversorgung 3p, Bus 3q für Programmschalter 3o, Näherungssensor 3l, Zutrittskontrolle 3r, Innentaster 3s, Außentaster 3t, Nacht-Bank Schlüsselschalter 3u, Programmschalter 3o, Alarm 3e, Drehschaltkontakt 3v, Riegelschaltkontakt 3w, Türkontakte 3c, elektrischer Öffner für Standflügel 3as, elektrischer Öffner für Gehflügel 3ag, Motorschloss für Standflügel 3js, Motorschloss für Gehflügel 3jg, Türantrieb für Standflügel 3hs, Türantrieb für Gehflügel 3hg, mit Türantrieb verbundene Komponenten 3x, Rückmeldung vom Motorschloss 3yj, Rückmeldung vom elektrischen Öffner für den Gehflügel 3yag, Rückmeldung vom elektrischen Öffner für den Standflügel 3yas, Rückmeldung der Türkontakte 3yc, Rückmeldung des Riegelschaltkontakts 3yw und Rückmeldung des Drehschaltkontakts 3yv.

Ein Gebäudeteil 13, insbesondere eine Wand 13b, mit einem Türsystem 1, das gemäß der vorangehenden Beschreibung ausgebildet ist, ist in Fig. 1, 4, 5 und 6 erkennbar.

Das beschriebene Türsystem 1 kann mittels des Anschlusskastens 4 besonders einfach verdrahtet werden.

## Patentansprüche

1. Türsystem (1), aufweisend:
eine Tür (2), insbesondere eine Schiebetür oder eine Drehflügeltür (2a),
elektrische Komponenten (3), die mit der Tür (2) verbunden sind und welche zum Steuern und Überwachen zumindest einer Türfunktion vorgesehen sind, und
einen Anschlusskasten (4), an welchen die elektrischen Komponenten (3) über elektrische Leitungen (5) angeschlossen sind, wobei an dem Anschlusskasten (4) zugewandten Enden (6) zumindest zweier unterschiedlicher Teilmengen (7) der elektrischen Leitungen (5) jeweils ein erste elektrische Kontaktelemente (9) aufweisendes Verbindungselement (8) vorgesehen ist und der Anschlusskasten (4) für jedes Verbindungselement (8) jeweils ein zweite elektrische Kontaktelemente (11) aufweisendes Anschlusselement (10) aufweist, welches zum elektrischen Verbinden mit dem jeweiligen Verbindungselement (8) ausgebildet ist, **dadurch gekennzeichnet, dass** jedes Anschlusselement (10) und das damit zu verbindende Verbindungselement (8) eine zur gegenseitigen Zuordnung ausgebildete Zuordnungseinrichtung (12) aufweisen, die sich von den Zuordnungseinrichtungen (12) der anderen Anschlusselemente (10) und der damit zu verbindenden Verbindungselemente (8) unterscheidet, und dass der Anschlusskasten (4) eine Leiterplatte (22) aufweist, mit welcher die Anschlusselemente (10) verbunden sind, und Leiterbahnen (23a) der Leiterplatte (22) jeweils zwei Enden aufweisen, wobei eines der Enden einer Leiterbahn (23a) mit einem zweiten elektrischen Kontaktelement (11) eines der Anschlusselemente (10) und das andere der Enden der Leiterbahn (23a) mit einem zweiten elektrischen Kontaktelement (11) eines anderen der Anschlusselemente (10) verbunden ist.

2. Türsystem (1) nach Anspruch 1, **dadurch gekennzeichnet, dass** als Zuordnungseinrichtung (12) ein im verbundenen Zustand vorliegender Formschluss zwischen den Anschlusselementen (10) und den damit zu verbindenden Verbindungselementen (8), insbesondere ein Formschluss zwischen Gehäusen (17) und/oder Kontaktelementanordnungen (18) der Anschlusselemente (10) und der Verbindungselemente (8), oder eine jeweils den Anschlusselementen (10) und den damit zu verbindenden Verbindungselementen (8) zugeordnete Farbgebung (15) oder Beschriftung (16) vorgesehen ist.

3. Türsystem (1) nach Anspruch 1 oder 2, **dadurch gekennzeichnet, dass** die ersten und zweiten elektrischen Kontaktelemente (9, 11) Steck-Kontaktelemente (9a, 11a) sind und insbesondere das Verbindungselement (8) ein Stecker (8a) oder eine Buchse (8b) ist und das Anschlusselement (10) das andere von einem Stecker (10a) und einer Buchse (10b) ist.

4. Türsystem (1) nach einem der Ansprüche 1 bis 3, **dadurch gekennzeichnet, dass** jedes Verbindungselement (8) über eine der Teilmengen (7) der elektrischen Leitungen (5) mit einer der elektrischen Komponenten (3) verbunden ist und insbesondere jede elektrische Komponente (3) über eine der Teilmengen (7) der elektrischen Leitungen (5) mit einem der Verbindungselemente (8) verbunden ist.

5. Türsystem (1) nach einem der Ansprüche 1 bis 4, **dadurch gekennzeichnet, dass** die elektrischen Leitungen (5) zwischen den elektrischen Komponenten (3) und den Verbindungselementen (8) als zumindest ein Kabelbaum (21) ausgebildet sind.

6. Türsystem (1) nach einem der Ansprüche 1 bis 5, **dadurch gekennzeichnet, dass** die elektrischen Komponenten (3) eines oder mehrere von
- einem elektrisch betriebenen Motorschloss (3j),
- einem elektrisch kuppelbaren Schloss,
- einem mechanischen Schloss mit Rückmeldungen,
- einem elektrischen Türöffner (3a),
- einem elektrischen Türkontaktsensor (3c),
- einem Riegelschaltkontakt (3k),
- einem elektrisch angetriebenen Türantrieb (3h),
- einem elektrischen Bedienelement (3b), insbesondere einem Näherungssensor (3l), einem Taster (3m) oder einem Schlüsselschalter (3n) als Bedienelement (3b) sind,
welche der Tür (2) zugeordnete Türkomponenten sind,
und/oder eines oder mehrere von
- einem Steuerungsmodul (3d) für ein Gebäude oder
- einer Brandmeldeanlage (3e) sind,
welche dem Gebäude zugeordnete Gebäudekomponenten sind.

7. Türsystem (1) nach einem der Ansprüche 1 bis 6, **dadurch gekennzeichnet, dass** die Anschlusselemente (10) auf der Leiterplatte (22) montiert sind, und die zweiten elektrischen Kontaktelemente (11) eines einer Türkomponente zugeordneten Anschlusselements (10) über die Leiterbahnen (23a) der Leiterplatte (22) mit den zweiten elektrischen Kontaktelementen (11) eines einer Gebäudekomponente zugeordneten Anschlusselements (10) verbunden sind.

8. Türsystem (1) nach einem der Ansprüche 1 bis 7, **dadurch gekennzeichnet, dass** der Anschlusskasten (4) zudem zumindest eine elektrische Sicherung (24) und/oder einen Gleichrichter (25) und/oder einen Transformator (26) aufweist.

9. Türsystem (1) nach einem der Ansprüche 1 bis 8, **dadurch gekennzeichnet, dass** der Anschlusskasten (4) zur Montage an einer Gebäudewand (13b) ausgebildet ist.

10. Gebäudeteil (13), insbesondere Wand (13b), mit einem Türsystem (1), das nach einem der vorhergehenden Ansprüche ausgebildet ist.

## Claims

1. Door system (1) comprising:
a door (2), in particular a sliding door or a swing door (2a),
electrical components (3) connected to the door (2) and provided to control and monitor at least one door function, and
a connection box (4) to which the electrical components (3) are connected via electrical lines (5),
wherein at least two different subsets (7) of the electrical lines (5) comprise ends (6) facing the connection box (4) and a connecting element (8) comprising first electrical contact elements (9) is provided at each end (6) and for each connecting element (8) the connection box (4) comprising a connection element (10) comprising second electrical contact elements (11), the connection element (10) being designed for electrical connection to the respective connecting element (8),
**characterised in that** each connection element (10) and the connecting element (8) to be connected thereto comprise an assignment feature (12) designed for mutual assignment, which differs from the assignment features (12) of the other connection elements (10) and of the connecting elements (8) to be connected thereto, and **in that** the connection box (4) comprises a printed circuit board (22) to which the connection elements (10) are connected, and conductor paths (23a) of the printed circuit board (22) each comprise two ends, one of the ends of a conductor path (23a) is connected to a second electrical contact element (11) of one of the connection elements (10) and the other of the ends of the conductor path (23a) is connected to a second electrical contact element (11) of another of the connection elements (10).

2. Door system (1) according to claim 1, **characterised in that** the assignment feature (12) is a form-locking connection between the connection elements (10) and the connecting elements (8) to be connected thereto, which is present in the connected state, in particular a form-locking connection between housings (17) and/or contact element arrangements (18) of the connection elements (10) and of the connecting elements (8), or an assigned colour coding (15) or labelling (16) assigned to the connection elements (10) and to the connecting elements (8) to be connected thereto.

3. Door system (1) according to claim 1 or 2, **characterised in that** the first and second electrical contact elements (9, 11) are plug-in contact elements (9a, 11a) and, in particular, the connecting element (8) is a plug (8a) or a socket (8b) and the connection element (10) is the other of a plug (10a) and a socket (10b).

4. Door system (1) according to one of claims 1 to 3, **characterised in that** each connecting element (8) is connected to one of the electrical components (3) via one of the subsets (7) of the electrical lines (5) and, in particular, each electrical component (3) is connected to one of the connecting elements (8) via one of the subsets (7) of the electrical lines (5).

5. Door system (1) according to one of claims 1 to 4, **characterised in that** the electrical lines (5) between the electrical components (3) and the connecting elements (8) are designed as at least one cable harness (21).

6. Door system (1) according to one of claims 1 to 5, **characterised in that** the electrical components (3) are one or more of
- an electrically operated motor lock (3j),
- an electrically engageable lock,
- a mechanical lock with feedback,
- an electric door opener (3a),
- an electric door contact sensor (3c),
- a bolt switch contact (3k),
- an electrically driven door drive (3h),
- an electrical operating element (3b), in particular a proximity sensor (3l), a push button (3m) or a key switch (3n) as the operating element (3b),
which are door components assigned to the door (2),
and/or are one or more of
- a control module (3d) for a building or
- a fire alarm system (3e),
which are building components assigned to the building.

7. Door system (1) according to one of claims 1 to 6, **characterised in that** the connection elements (10) are mounted on the printed circuit board (22), and the second electrical contact elements (11) of a connection element (10) assigned to a door component are connected via the conductor paths (23a) of the printed circuit board (22) to the second electrical contact elements (11) of a connection element (10) assigned to a building component.

8. Door system (1) according to one of claims 1 to 7, **characterised in that** the connection box (4) also comprises at least one electrical fuse (24) and/or a rectifier (25) and/or a transformer (26).

9. Door system (1) according to one of claims 1 to 8, **characterised in that** the connection box (4) is designed for mounting on a building wall (13b).

10. Part of a building (13), in particular a wall (13b), with a door system (1) designed according to one of the preceding claims.

## Revendications

1. Système de porte (1), comprenant :
une porte (2), en particulier une porte coulissante ou une porte battante (2a),
des composants électriques (3) qui sont reliés à la porte (2) et qui sont prévus pour commander et surveiller au moins une fonction de porte, et
un boîtier de raccordement (4), auquel les composants électriques (3) sont connectés par des lignes électriques (5),
dans lequel
aux extrémités (6) d'au moins deux sous-ensembles différents (7) des lignes électriques (5) tournées vers le boîtier de raccordement (4), est prévu respectivement un élément de connexion (8) comportant des premiers éléments de contact électriques (9), et le boîtier de raccordement (4) comprend, pour chaque élément de connexion (8), un élément de raccordement (10) comportant des seconds éléments de contact électriques (11), lequel est conçu pour se connecter électriquement avec l'élément de connexion (8) respectif,
**caractérisé en ce que**
chaque élément de raccordement (10) et l'élément de connexion (8) à connecter avec celui-ci comprennent un dispositif d'attribution (12) conçu pour l'attribution mutuelle, qui diffère des dispositifs d'attribution (12) des autres éléments de raccordement (10) et des éléments de connexion (8) à connecter avec ceux-ci, et **en ce que** le boîtier de raccordement (4) comprend une carte de circuit imprimé (22) à laquelle sont connectés les éléments de raccordement (10), et des pistes conductrices (23a) de la carte de circuit imprimé (22) présentent respectivement deux extrémités, une des extrémités d'une piste conductrice (23a) étant connectée à un second élément de contact électrique (11) d'un des éléments de raccordement (10) et l'autre des extrémités de la piste conductrice (23a) étant connectée à un second élément de contact électrique (11) d'un autre des éléments de raccordement (10).

2. Système de porte (1) selon la revendication 1, **caractérisé en ce que** comme dispositif d'attribution (12) est prévu un ajustement par complémentarité de forme existant à l'état connecté entre les éléments de raccordement (10) et les éléments de connexion (8) à connecter avec ceux-ci, en particulier un ajustement par complémentarité de forme entre des boîtiers (17) et/ ou des agencements d'éléments de contact (18) des éléments de raccordement (10) et des éléments de connexion (8), ou une coloration (15) ou un marquage (16) attribués respectivement aux éléments de raccordement (10) et aux éléments de connexion (8) à connecter avec ceux-ci.

3. Système de porte (1) selon la revendication 1 ou 2, **caractérisé en ce que** les premiers et seconds éléments de contact électriques (9, 11) sont des éléments de contact enfichables (9a, 11a) et en particulier l'élément de connexion (8) est une fiche (8a) ou une prise (8b) et l'élément de raccordement (10) est l'autre d'une fiche (10a) et d'une prise (10b).

4. Système de porte (1) selon l'une des revendications 1 à 3, **caractérisé en ce que** chaque élément de connexion (8) est relié à l'un des composants électriques (3) par l'un des sous-ensembles (7) des lignes électriques (5), et en particulier chaque composant électrique (3) est relié à l'un des éléments de connexion (8) par l'un des sous-ensembles (7) des lignes électriques (5).

5. Système de porte (1) selon l'une des revendications 1 à 4, **caractérisé en ce que** les lignes électriques (5) entre les composants électriques (3) et les éléments de connexion (8) sont réalisées sous forme d'au moins un faisceau de câbles (21).

6. Système de porte (1) selon l'une des revendications 1 à 5, **caractérisé en ce que**
les composants électriques (3) sont un ou plusieurs parmi
- une serrure motorisée électrique (3j),
- une serrure à embrayage électrique,
- une serrure mécanique avec retours d'information,
- un ouvre-porte électrique (3a),
- un capteur de contact de porte électrique (3c),
- un contact de commutation de verrou (3k),
- un entraînement de porte à commande électrique (3h),
- un élément de commande électrique (3b), en particulier un capteur de proximité (31), un bouton-poussoir (3m) ou un commutateur à clé (3n) comme élément de commande (3b),
qui sont des composants de porte associés à la porte (2),
et/ou un ou plusieurs parmi
- un module de commande (3d) pour un bâtiment ou
- un système d'alarme incendie (3e),
qui sont des composants de bâtiment associés au bâtiment.

7. Système de porte (1) selon l'une des revendications 1 à 6, **caractérisé en ce que**
les éléments de raccordement (10) sont montés sur la carte de circuit imprimé (22), et les seconds éléments de contact électriques (11) d'un élément de raccordement (10) associé à un composant de porte sont reliés aux seconds éléments de contact électriques (11) d'un élément de raccordement (10) associé à un composant de bâtiment via les pistes conductrices (23a) de la carte de circuit imprimé (22).

8. Système de porte (1) selon l'une des revendications 1 à 7, **caractérisé en ce que**
le boîtier de raccordement (4) comprend en outre au moins un fusible électrique (24) et/ou un redresseur (25) et/ou un transformateur (26).

9. Système de porte (1) selon l'une des revendications 1 à 8, **caractérisé en ce que**
le boîtier de raccordement (4) est conçu pour être monté sur un mur de bâtiment (13b).

10. Partie de bâtiment (13), en particulier mur (13b), avec un système de porte (1) qui est réalisé selon l'une des revendications précédentes.
